# EUROPEAN PATENT APPLICATION

(11) **EP 4 737 117 A1**
(43) Date of publication of application: **06.05.2026**
(21) Application number: 25211808.8
(22) Date of filing: 28.10.2025
(51) Int. Cl.: B32B 27/08, B32B 27/10, B32B 27/20, B32B 27/30, B32B 27/32, B32B 29/06, E04D 5/00

(54) **COVER BOARD FOR THERMALLY JOINED ROOFING ASSEMBLIES**

(30) Priority: 29.10.2024 US 202463713437 P; 17.10.2025 US 202519362188
(71) Applicant: Carlisle Construction Materials, LLC, Carlisle, PA 17013 (US)
(72) Inventor: MOUNTAIN, Gregory, Newville, PA 17241 (US)
(74) Representative: Mewburn Ellis LLP

(57) **Abstract**

A roofing cover board, having: a top layer having a greater affinity to bond with TPO than PVC; a core layer including recycled material; and a bottom layer having a greater affinity to bond with PVC than TPO.

## Description

### Related Application:

The present invention claims priority to U.S. Provisional Patent Application Serial No. 63/713,437, entitled Improved Cover Board For Thermally Joined Roofing Assemblies, filed October 29, 2024, the entire disclosure of which is incorporated herein by reference in its entirety for all purposes.

### Technical Field:

The present invention relates to cover boards for TPO and PVC roofing systems.

### Background of the Invention:

Cover boards are typically installed on top of blocks of roofing insulation material. A top roofing membrane is then installed thereover (e.g.: rolled out and attached) on top of the cover board. Roofing membranes are typically made of materials like TPO and PVC.

Adhering TPO or PVC roofing membranes on top of the cover board is typically done with adhesives. Unfortunately, TPO and PVC materials have very different polarities meaning that unique adhesives must be formulated to adhere to either of these materials. As a result, a typical cover board can only be used with a subset of adhesive chemistries based on the surface properties of the cover board.

In addition, thermally joining the roofing membrane to the cover board or insulation material requires similar facer chemistries to be chosen to match the surface energy properties of the membrane to permit proper thermal welding and joining.

It would instead be desirable to provide a cover board that can be used with either a TPO or a PVC roofing membrane. As will be shown, the present cover board system can be used with either TPO or PVC roofing systems, as desired.

Secondly, to reduce pollution, it has become desirable to use recycled materials in roofing systems when possible. For example, when TPO roofing materials have finished their normal lifespan of use, they are simply removed from buildings and are sent into landfills. What would instead be desired would be systems for recycling these old TPO roofing membranes such that they are not simply discarded after they have reached the end of their operational lives. In short, finding a way to recycle TPO roofing membranes into desirable new building materials would cut down on landfill pollution.

The same is true for PVC roofing. Specifically, when PVC roofs need to be removed and replaced, they are also simply broken up and sent to landfills. It would instead be desirable that both TPO and PVC roofs could be recycled such that some of these materials can then be re-used in new roofing systems.

Generally speaking, there are many other materials (including various paper products, plastic products and even textiles) that would benefit from being recycled. Ideally, it would be desirable if such materials could be used in roofing systems and cover boards in particular.

As will be shown, the present system incorporates many different recycled materials to provide a novel cover board solution that can be quickly switched to work well with either a TPO or a PVC roofing membrane. As will also be shown, this will be possible when either adhesives or induction welding is used to attach the roofing membrane onto the top of the present cover board.

### Summary of the Invention:

The present invention provides a cover board having top and bottom layers that have different surface properties. Specifically, in preferred embodiments, the top layer is designed to bond well with TPO and the bottom layer is designed to bond well with PVC. Advantageously, this is true whether the bonding is performed either with adhesives, hot air welding or with induction welding.

During installation, the operator simply places the TPO-friendly top layer on top when attaching a TPO roofing membrane thereover (i.e.: to the TPO-friendly side). Conversely, the operator simply flips the cover board upside down thereby placing the PVC-friendly layer on top when attaching a PVC roofing membrane thereover (i.e.: to the PVC-friendly side).

In preferred embodiments, the present invention provides a roofing cover board, comprising:
a top layer having a greater affinity to bond with TPO than PVC; and
a bottom layer having a greater affinity to bond with PVC than TPO.

In preferred embodiments, either or both of the top and bottom layers comprise recycled materials. Preferably, the recycled materials in the top layer are formulated to promote bonding to TPO roofing membranes and the recycled materials in the bottom layer are formulated to promote bonding to PVC roofing membranes. Most preferably, the top layer includes recycled TPO and the bottom layer includes recycled PVC. This advantageously permits a quick and easy installation as the same cover board can be used with either TPO or PVC roofing, and the operator only has to flip the correct side of the cover board up and then complete the installation of the desired roofing membrane on top.

In other preferred embodiments, the roofing cover board further comprises a core layer positioned between the top and bottom layers. This the core layer comprises recycled material. Preferably, the recycled material in the core layer comprises paper or plastic or blends of paper and plastic. Other materials such as textiles can be used as well. The particular advantage of this recycled content core layer is that a wide variety of materials can be used. This results in potentially diverting a large number of materials from landfills. Since the core layer need not be TPO-friendly or PVC-friendly, this increases the possible sources and types of materials that can be used as the recycled materials. An additional benefit of using recycled materials in the present cover board is that it can be used to get LEED^{®} points for green building construction.

In various embodiments, the present cover board has two layers with one layer being TPO-friendly and the other layer being PVC-friendly. In other embodiments, a third (i.e.: centrally positioned "core") layer is added. This optional core layer is preferably made of at least some recycled materials and need not be either TPO-friendly or PVC-friendly. It is to be understood that all three layers may have different compositions and formulations of recycled materials. For example, the core layer may comprise shredded paper or shredded or granulated post-consumer or post-industrial plastic films. It may also comprise fillers, including but not limited to, calcium carbonate, barium sulfate, talc and clay.

In preferred embodiments, the top layer may include recycled TPO, the bottom layer may include recycled PVC and the central or core layer may comprise all sorts of recycled materials, including TPO, PVC and many other plastic and paper materials, textiles and combinations thereof.

In some optional embodiments, the present cover board may comprise a bottom facer (which may bond or adhere to a wide variety of materials including PVC when the top of the cover board is TPO-friendly). This optional facer may be made of cellulose, kraft paper, a glass mat, a plastic film, or similar material.

Optionally, a top facer may also be included (for example, for protection of the cover board during shipping and installation).

### Brief Description of the Drawings:

Fig. 1 is a side elevation view of a two-layer cover board having a top layer that is TPO-friendly and a bottom layer that is PVC friendly. An optional film between these two layers may be included, as will be explained, but is not shown in this figure.
Fig. 2 is a side elevation view of a three-layer cover board having a top layer that is TPO-friendly, a bottom layer that is PVC friendly, and a central core layer that is neither TPO- or PVC-friendly.
Fig. 3 is a side elevation view of a two-layer cover board having a top layer that is either TPO-friendly or PVC-friendly with a bottom layer that is neither TPO- or PVC-friendly.
Fig. 4 is a side elevation view of a three-layer assembly having a top layer that is TPO-friendly, a core layer that is neither TPO- or PVC-friendly and a bottom facer that is PVC friendly.

### Detailed Description of the Drawings:

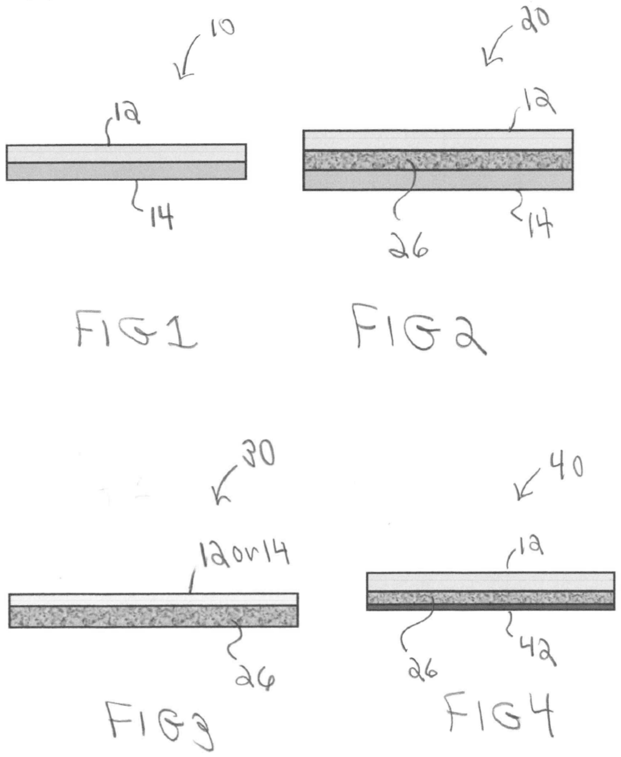

Referring first to Fig. 1, a cover board assembly 10 is provided. Cover board assembly 10 has a top layer 12 and a bottom layer 14. Top layer 12 has a greater affinity to bond with TPO than PVC. Bottom layer 14 has a greater affinity to bond with PVC than TPO. Optionally, a thin, preferably plastic film (not shown in Fig. 1) may be included between layers 12 and 14. This thin film would have at least some affinity to both TPO and PVC to facilitate the thermal bonding of these layers together during manufacturing.

Preferably, either or both of the top and bottom layers 12 and 14 include or comprise recycled materials. Specifically, top layer 12 may include recycled TPO and bottom layer 14 may comprise recycled PVC. Simply put, the greater the concentration of TPO in top layer 12, the easier a TPO membrane will bond or adhere to it. This is true whether using TPO formulated adhesives or when using induction welding to attach a TPO roofing membrane (not shown) onto top layer 12. Similarly, the greater the concentration of PVC in bottom layer 14, the easier a PVC membrane will bond to it. This is true whether using PVC formulated adhesives or when using induction welding to attach a PVC roofing membrane (not shown) onto bottom layer 14.

Therefore, if the user wants to install a TPO roofing membrane on top of cover board 10, the installer will leave top layer 12 facing upwards. Conversely, if the installer instead wants to install a PVC roofing membrane on top of cover board 10, the installer will instead flip cover board 10 over, and place layer 14 at the top and layer 12 at the bottom. As such, references to "top" and "bottom" as used herein are understood to be reversed when the illustrated embodiments are placed upside down.

In addition to being TPO-friendly, the top layer 12 may instead be formulated to be PE or PP friendly (for example, by including recycled particles of PE or PP in layer 12).

Referring next to Fig. 2, a cover board assembly 20 is provided. Cover board assembly 20 has the same top layer 12 and a bottom layer 14. Top layer 12 has a greater affinity to bond with TPO than with PVC. Bottom layer 14 has a greater affinity to bond with PVC than TPO. Preferably, the top and bottom layers 12 and 14 include or comprise recycled material. Specifically, top layer 12 may include recycled TPO and bottom layer 14 may comprise recycled PVC.

In Fig. 2, an optional center "core" layer 26 is included. Core layer 26 comprises recycled material. It is to be understood that the recycled material used in core layer 26 need not be either TPO-friendly or PVC-friendly. As such, a greater variety of materials may be used to supply the recycled material content in this layer. In preferred embodiments, the recycled material in core layer 26 comprises paper, or plastic or blends of paper and plastic. Textiles may also be included. The advantage of core layer 26 is that it allows cost optimization (by maximizing cheap paper or plastic content in the cover board assembly) while still allowing the present cover board assembly to have both a TPO-friendly side and a PVC-friendly side.

Fig. 3 is a side elevation view of a two-layer cover board having a top layer that is either TPO-friendly or PVC-friendly and a bottom layer that is neither TPO- or PVC-friendly. Specifically, cover board assembly 30 includes the same "core" layer as was described above in Fig. 2. In contrast, no PVC-friendly bottom layer is included (as it was in Fig. 2). Instead, either one of a TPO-friendly layer 12 or a PVC-friendly layer 14 is included as the top layer. This illustrated embodiment is designed to be used either with a TPO roofing membrane or with a PVC roofing membrane, and this must be known at the outset. If the roofing membrane to be attached on top of assembly 30 is TPO, then TPO-friendly layer 12 will be used. Conversely, If the roofing membrane to be attached on top of assembly 30 is PVC, then a PVC-friendly layer 14 will be used as the top layer. Although this embodiment lacks the versatility of being able to be brought to a job site and then flipped over and used with either TPO or PVC roofing membranes, it has its advantages. Specifically, core layer 26 can still be used with a wide range of adhesives due to its preferred paper content. Only the top layer (12 or 14) needs to be specifically tailored to be TPO or PVC friendly.

Lastly, Fig. 4 is a side elevation view of a three-layer assembly having a top layer that is TPO-friendly, a core layer that is neither TPO- or PVC-friendly and a bottom facer that is PVC- friendly. Specifically, a TPO-friendly top layer 12 is used. (In optional embodiments, a PVC-friendly layer 14 can be substituted, as desired). Core layer 26 operates as described above and consists of the materials previously described. In the embodiment of Fig. 4, however, a bottom facer 42 is added. Facer 42 may be made of cellulose, kraft paper, a glass mat, a plastic film, or other suitable material. The advantage of using cellulose, kraft paper, glass matting, plastic film, etc. as facer 42 is that it can be bonded with a wide variety of adhesives to the roof.

In Figs. 2, 3 and 4, the core layer 26 is used. As stated, a wide variety of materials can be used in the manufacture of core layer 26. Optionally, core layer 26 may comprise shredded paper or shredded or granulated post-consumer or post-industrial plastic films. Core layer 26 may also comprise fillers, including but not limited to, calcium carbonate, barium sulfate, talc and clay. As also stated above, the present invention provides novel uses for many different recycled materials. These recycled materials may comprise recycled post-consumer or post-industrial TPO or PVC roofing membranes. As such, the present system also relates to systems for recycling used TPO or PVC roofing membranes, or roofing membranes made of other thermoplastics, into new cover board building materials. Optionally, they may be used for wall sheathing cover boards.

The advantage of using recycled TPO or PVC membranes is that this keeps the recycled materials within the same basic industry. This would simplify supply chains since the same companies and building trades that are removing the old roofing membranes would be the same ones that would be using and installing these new recycled cover boards 10, 20, 30 and 40.

In various embodiments that use recycled TPO, layer 12 is manufactured by supplying a shredded or granulated TPO material, wherein some of the shredded or granulated TPO material is post-industrial or post-consumer use TPO material; and then heating and compressing the shredded or granulated TPO material to form layer 12. In preferred aspects, up to 20%, 20% to 60%, or 60% to 100% of the TPO may be post-industrial or post-consumer use TPO. The advantage of the present invention is that it both minimizes landfill pollution and also provides a new building material with superior properties as compared to other polymer based cover board and facer products. This advantage is due to the presence of fibers which are either added to the product during production and/or are already naturally present in the roofing membranes which are initially used to produce top layer 12.

One example of superior properties achieved by the present inventors was experimentally obtaining tensile strength failure of over 600psi for thin embodiments of the material used to make layer 12. These tensile failure strengths are much better than typically achieved with similar polymers alone. One example of woven fibers already present in the material (at the start of the present process) would be PET sandwiched into the center of a standard TPO roofing membrane sheet. Advantageously, such PET fibers will remain in the shredded or granulated TPO material that is used to make the present building material. The cover boards made from these materials can optionally be produced by extrusion.

In other preferred embodiments, additional fiber reinforcement material can be mixed into the shredded or granulated TPO material prior to the heating and compressing step. This fiber reinforcement material may be PET or glass fiber, and may be shredded or granulated scrim from the post-industrial or post-consumer use TPO material. This fiber reinforcement material may be woven material that is shredded.

In other preferred embodiments, shredded or granulated PVC, EPDM, tire rubber PET, polyethylene, polypropylene, polystyrene, polyurethane may be mixed into the shredded or granulated TPO material prior to the heating and compressing step. Adding polystyrene has the advantage of reducing the weight of the final product and also contribute some fire retardancy. These advantages are especially enhanced if expanded polystyrene is used.

In other preferred embodiments, granulated or shredded insulation material may be mixed into the shredded or granulated TPO material prior to the heating and compressing step. In such cases, the granulated or shredded insulation material is preferably between 5% and 50% of the total weight of the cover board material, as higher amounts may tend to reduce the mechanical strength of the cover board.

In other preferred embodiments, a solvent or water based adhesive binder may optionally be mixed into the shredded or granulated TPO material prior to the heating and compressing step.

In other preferred embodiments, additional fillers such as carbon black, calcium carbonate, clay, titanium dioxide, barium sulfate, and silica may be used to further increase the rigidity of the embodiments, alter the color of the material, and/or decrease the flammability of the material. It is to be understood that mixing one or more of these fillers is contemplated within the scope of the present invention.

In various uses, the new recycled TPO building material supplied by the present method described above may be used in different applications. For example, when the present material is supplied with a thickness of 0.010 and 0.080 inches, it can be attached to any of a polyisocyanurate, foamed polyurethane, expanded polystyrene, extruded polystyrene, glass fiber, mineral fiber, or aerogel insulation material such that the cover board acts as an insulation facer.

In further embodiments, top layer 12 or bottom layer 14 can be textured to increase friction for foot traffic thereon or to provide additional surface area for adhesives to bond thereto.

In further embodiments, a sacrificial film which may be a polyethylene film with a rubber based pressure sensitive adhesive (such as APEEL^{™}, made by Carlisle Construction Materials of Carlisle, Pennsylvania) can be added on top or bottom of the present cover board to protect the material from getting dirty during installation.

In preferred methods of forming TPO-friendly layer 12, the temperature that is used is sufficiently high to melt the TPO, but not melt its PET reinforcing scrim. The melting point of TPO is approximately 320F and the PET melting point is approximately 500F. Therefore, temperatures between 320 and 490F are preferably used in accordance with the present system. In cases where glass reinforcement is used in the TPO (as opposed to PET), preferred temperatures over 320F would be sufficient. This is because glass melting temperature is so high that such temperatures would simply burn the TPO, and therefore such high temperatures would not be attempted.

Shredding of the TPO results in cut flakes that have "hairy" PET scrim protrusions extending out of the cut ends. This is advantageous because these hairy frayed ends provide excellent reinforcement when the material is heated and pressurized to be melted together. As such, this approach is preferred to simply cutting the TPO to have clean edges (for example, cutting with blades or scissors).

Existing recycling systems tend to rely on extrusion and the presence of PET scrim tends to get stuck in the processing machinery, leading to downtime. As a result, the old recycling approach was to attempt to remove as much of the PET scrim as possible. In contrast, the present system of recycling TPO specifically uses the presence of PET scrim to its advantage.

In other preferred embodiments, the present recycled TPO-friendly layer 12 may be made by optionally mixing one of granulated PVC, EPDM, tire rubber, PET, polyethylene, polypropylene, polystyrene or polyurethane into the shredded or granulated TPO material prior to the heating and compressing step. The advantage of this approach is that other common roofing materials may be added into the mixture prior to heating and compression to form the final building material. This has the advantage of reducing the amounts of these additional building materials that are typically just sent to landfills. This further reduces pollution.

In other preferred embodiments, the present recycled TPO-friendly layer 12 may be made by optionally mixing granulated or shredded insulation material into the shredded or granulated TPO material prior to the heating and compressing step. Such granulated or shredded insulation material may preferably be between 5% and 50% of the total weight of the TPO-friendly layer 12. This advantage of this approach is that it reduces the amount of insulation that is sent to landfills.

In optional preferred embodiments, a solvent or water based adhesive binder may be mixed into the shredded or granulated TPO material prior to the heating and compressing step. This has the advantage of making the recycled TPO building material hold together better. The use of an adhesive in the field can result in result in paper insulation facer and/or fiberglass insulation facer still being stuck to the TPO membrane at the start of the present recycling process (i.e.: prior to shredding the TPO). As a result, materials that may be present in the recycled TPO material include small amounts of paper, fiberglass, foil, etc. that can amount to up to 5% by weight of the total material. Normally, these materials are simply contaminated by the use of the adhesives and are therefore currently very difficult to recycle. As a result, they currently must be discarded because they are too hard to process and put into any common recycling streams. In contrast, however, in accordance with the present system, these paper, fiberglass, and foil materials can simply be included directly into the recycling process when forming the present building material.

In addition to the above-described recycled materials to top TPO-friendly layer 12, core layer 26 may also contain a wide variety of paper/ cellulose materials. For example, core layer 26 can be made to comprise any of the paper/ cellulose and plastic materials (and/or fiberglass web, nylon film, polyester film, polypropylene film, textiles) as described in U.S. Patents 11,919,200; entitled "Roof Cover Board with Improved Fragment Size and Plastic-to-Paper Ratio"; 11,806,972; entitled "Composite Panels with Adhesive and Separate Fragment Layers"; 11,718,995; entitled "Roof Cover Board Derived from Engineered Recycled Content" and 11,060,290; also entitled "Roof Cover Board Derived from Engineered Recycled Content", all of which are owned by Continuus Materials of The Woodlands, Texas, the entire disclosure of which are all incorporated herein by reference in their entireties for all purposes.

## Claims

1. A roofing cover board, comprising:
a top layer having a greater affinity to bond with TPO than PVC; and
a bottom layer having a greater affinity to bond with PVC than TPO.

2. The roofing cover board of claim 1, wherein at least one of the top and bottom layers comprises recycled material.

3. The roofing cover board of claim 1, wherein both the top and bottom layers comprise recycled material.

4. The roofing cover board of claim 1, further comprising:
a core layer positioned between the top and bottom layers, wherein the core layer comprises recycled material.

5. The roofing cover board of claim 4, wherein the recycled material in the core layer comprises paper.

6. The roofing cover board of claim 4, wherein each of the top, core and bottom layers comprise recycled material.

7. The roofing cover board of any of claims 2, 3 or 4, wherein the recycled material comprises paper or plastic or blends of paper and plastic.

8. The roofing cover board of claim 1, wherein the top layer comprises recycled TPO, PE or PP.

9. The roofing cover board of claim 1, wherein the bottom layer comprises recycled PVC.

10. The roofing cover board of claim 1, wherein the bottom layer comprises:
a core portion made of recycled material, and
a facer on the bottom of the core portion.

11. The roofing cover board of claim 1, wherein the facer is made of:
cellulose, kraft paper, a glass mat or a plastic film.

12. The roofing cover board of claim 1, wherein the top layer comprises a core portion made of recycled materials.

13. The roofing membrane of claim 4, wherein the core layer comprises shredded paper or shredded or granulated post-consumer or post-industrial plastic films.

14. The roofing membrane of claim 1 or 4, wherein at least one of the core layer, or top or bottom layers comprise fillers, including but not limited to, calcium carbonate, barium sulfate, talc and clay.

15. The roofing membrane of claim 9, wherein the core portion comprises:
shredded paper or shredded or granulated post-consumer or post-industrial plastic films; and/or
fillers, including but not limited to, calcium carbonate, barium sulfate, talc and clay.
